# EUROPEAN PATENT SPECIFICATION

(11) **EP 2 121 834 B1**
(45) Date of publication and mention of the grant of the patent: **14.07.2010**
(21) Application number: 08732184.0
(22) Date of filing: 14.03.2008
(51) Int. Cl.: C08L 43/04, C08L 77/00

(54) **AQUEOUS COMPOSITION FOR FILTER MEDIA WITH ENHANCED WET BURST STRENGTH**
WÄSSRIGE ZUSAMMENSETZUNG FÜR FILTERMEDIEN MIT ERHÖHTER NASSBERSTFESTIGKEIT
COMPOSITION AQUEUSE POUR MATÉRIAU DE FILTRE AVEC RÉSISTANCE AMPLIFIÉE À L'ÉCLATEMENT À L'ÉTAT HUMIDE

(30) Priority: 14.03.2007 US 724131
(43) Date of publication of application: 25.11.2009
(73) Proprietor: H B Fuller Licensing & Financing Inc., St. Paul, MN 55164-0683 (US)
(72) Inventor: MILLER, Wayne, P., Mounds View, MN 55112 (US)
(74) Representative: Maiwald, Walter
(86) International application number: PCT/US2008/056945
(87) International publication number: WO 2008/112951

(56) References cited:
- EP-A- 1 000 980
- EP-A- 1 731 544

## Description

### Field of Invention

The invention relates to a formaldehyde-free aqueous composition useful for treating cellulosic substrates e.g., paper.

### Background of the Invention

Air filter media are made from sheet-like cellulosic materials e.g., fiber webs or paper. Before manufacturing a filter medium, the cellulosic material has to be treated with a polymeric composition to obtain useful qualities such as high tensile strength, high wet and dry bursting strength, among other things. Good filter qualities are particularly desirable after storage under unfriendly conditions e.g., high temperature and/or high humidity. The treatment includes impregnating (or saturating) the cellulosic material or coating on one side or both sides of the material with the polymeric composition, and curing the composition under an elevated temperature.

Many conventional polymeric compositions include formaldehyde or formaldehyde-generating component(s). During the curing reaction, formaldehyde is volatilized from the compositions and into the surrounding environment, which is undesirable for the people working around the filter media manufacturing process and is also harmful to the environment, as well as to the filter end users. Therefore, efforts have been made to develope formaldehyde-free binder compositions to eliminate the emission of the harmful formaldehyde.

Nevertheless, there is till a need for aqueous formaldehyde-free compositions that exhibit enhanced properties including high bond strength and especially, high wet burst strength, as well as low water wicking.

### Summary of Invention

In one aspect, the invention features an aqueous composition that includes an aqueous silane functional polymer and a polyamide epichlorohydrin adduct. The aqueous silane functional polymer includes a reaction product of at least one first ethylenically unsaturated monomer and at least one second ethylenically unsaturated monomer. The first ethylenically unsaturated monomer is free of an oxysilane functional group, whereas the second ethylenically unsaturated monomer includes an oxysilane functional group.

The aqueous composition is substantially free of (i.e., has less than 100 parts per million (ppm)) formaldehyde, and preferably free of formaldehyde.

The aqueous composition exhibits, upon cure, a wet retention of greater than about 30% at about 20% dry add-on, based on the dry bursting strength tested according to the Dry Bursting Strength Test Method. A dry add-on is the amount of the dried composition on a treated substrate, based on the weight of the treated substrate. A treated substrate is a substrate that is contacted with the composition, and then dried and cured.

In another aspect, the invention features a method of treating a substrate that includes contacting the substrate with the aforesaid aqueous composition.

In one embodiment, the method further includes drying/curing the aqueous composition at a temperature of from about 210°F to about 400°F (99°C to 204°C), preferably from about 300°F to about 400°F (149°C to 204°C).

In one embodiment, the substrate is a cellulosic material. The cellulosic material includes those materials that are made of cellulosic fibers, polyester fibers, fiberglass fibers, or combinations thereof.

In one embodiment, the substrate is paper.

In another aspect, the invention features a method of strengthening a cellulosic substrate that includes contacting the cellulosic substrate with the aforesaid aqueous composition, and curing the composition.

In one embodiment, the substrate is paper.

In another aspect, the invention features an article that includes a substrate treated with the aforesaid aqueous composition of the invention.

In one embodiment, the substrate is a filter medium.

In one embodiment, the substrate is filter paper.

In one embodiment, the substrate exhibits, upon cure, a wet retention of greater than about 30% at about 20% dry add-on, based on the dry bursting strength tested according to the Dry Bursting Strength Test Method.

In one embodiment, the article is a filter.

In one embodiment, the article is an air filter.

In yet another aspect, the invention features a method of filtering a particle-containing fluid. The method includes passing the particle-containing fluid through the aforesaid article of the invention to separate the particles from the fluid.

In one embodiment, the fluid is air.

The aqueous composition can be provided as a one-part formulation and is particularly useful for treating and/or strengthening cellulosic materials or substrates. In some embodiments, the aqueous composition is well suited to application in manufacturing filter media, which can be constructed to exhibit high wet burst strength, as well as high stiffness and low paper discoloration.

### Detailed Description of the Invention

The aqueous composition of the invention includes an aqueous silane functional polymer and a polyamide epichlorohydrin adduct.

The aqueous silane functional polymer is water dispersible. It is obtainable through a free radical emulsion polymerization process. The aqueous silane functional polymer can be in the form of a dispersion, emulsion, latex, or suspension. The phrase "silane functional polymer" refers to a polymer that includes oxysilane moieties on the polymer backbone.

The aqueous silane functional polymer is derived from monomers that include at least one first ethylenically unsaturated monomer, and at least one second ethylenically unsaturated monomer. In some embodiments, the silane functional polymer is derived from monomers that include more than one first ethylenically unsaturated monomer and/or more than one second ethylenically unsaturated monomer. An ethylenically unsaturated monomer is a compound containing at least one carbon-carbon double bond, such as α,β-unsaturated carbonyl groups, vinyl groups, or allylic groups.

Useful first ethylenically unsaturated monomers are free of oxysilane functional groups. Examples of useful first ethylenically unsaturated monomers include esters of C₃ to C₆ α, β-monoethylenically unsaturated monocarboxylic or dicarboxylic acids with C₁ to C₁₂ (preferably C₁ to C₈) alkanols. Examples of such monocarboxylic or dicarboxylic acids include acrylic acid, methacrylic acid, maleic acid, fumaric acid, and itaconic acid. Examples of such esters include methyl, ethyl, n-butyl, isobutyl, tert-butyl, n-pentyl, isopentyl, and 2-ethylhexyl acrylate and/or methacrylate. Examples of other useful first ethylenically unsaturated monomers include vinylaromatic compounds such as styrene, α-methylstyrene, o-chlorostyrene, and vinyltoluene; vinyl esters of C₁ to C₁₈ monocarboxylic or dicarboxylic acids such as vinyl acetate, vinylpropionate, vinyl n-butyrate, vinyl laurate and/or vinyl stearate; ethylenically unsaturated monocarboxylic or dicarboxylic acids or their anhydrides such as acrylic acid, methacrylic acid, methacrylic anhydride, maleic acid, maleic anhydride, fumaric acid and/or itaconic acid; acrylamides and alkyl-substituted acrylamides such as acrylamide, methacrylamide, N,N-dimethylacrylamide, N-methylolmethacrylamide, N-tert-butylacrylamide, and N-methylmethacrylamide; or combinations thereof.

Preferably, useful first ethylenically unsaturated monomers include vinyl acetate, butyl acrylate, ethyl acrylate, methyl acrylate, 2-ethylhexyl acrylate, styrene, acrylic acid, methacrylic acid, acrylamide, N-methylolacrylamide, dibutyl maleate, dioctyl maleate, vinyl neo decanoate, or combinations thereof.

In one embodiment, the first ethylenically unsaturated monomer is vinyl acetate.

The aqueous silane functional polymer is preferably derived from at least one first ethylenically unsaturated monomer in an amount of from about 96 % by weight to about 99.99 % by weight, based on the total weight of the polymer solids.

Suitable second ethylenically unsaturated monomers include those that have oxysilane functional groups. Examples of suitable second ethylenically unsaturated monomers include such as (acryloxypropyl)trimethoxysilane, (methacryloxypropyl)trimethoxysilane, vinyltrimethoxysilane, vinyltriethoxysilane, or combinations thereof. Examples of commercially available suitable second ethylenically unsaturated monomers include e.g., KBM-5103, KBM-503, KBM-1003, and KBE-1003 from Shin-Etsu Silicones of America, Ltd. (Akron, OH); and SILQUEST A-151, A-171, and A-174, from Crompton (Greenwich, CT).

The aqueous silane functional polymer is preferably derived from the second ethylenically unsaturated monomer in an amount of at least about 0.01 % by weight, in some embodiments at least about 0.05 % by weight, in other embodiments at least about 0.7% by weight, in other embodiment no greater than about 3% by weight, in other embodiments no greater than about 4% by weight, based on the weight of the polymer solids.

The aqueous silane functional polymer can be prepared using known aqueous emulsion polymerization techniques. Aqueous emulsion polymerization is also known as a free radical initiated chain polymerization in which a monomer or a mixture of monomers is polymerized in the presence of surfactant(s), hydrocolloids, chain transfer agent(s), free radical initiator(s), anti-foaming agent(s), coalescents, wetting agents, reducers, buffers, freeze thaw additives, or combinations thereof, to form a polymer or a copolymer.

Polyamide epichlorohydrin adduct is used as a water-soluble crosslinking agent. It can crosslink with oxysilane groups and hydrocolloid during the polymer cure, thereby increasing the wet bursting strength and decreasing the water/humidity absorption.

Useful polyamide-epichlorohydrin adducts can have a polyamide backbone structure with the epichlorohydrin functionality associated with an amine group in the polymer. These adducts can be produced by any method known to those skilled in the art. One such method includes the reaction of any polycarboxylic acid, such as succinic acid, maleic acid, terephthalic acid or adipic acid with polyalkylene polyamine. The resultant long chain polyamide is then reacted with epichlorohydrin. The amounts of these materials reacted to produce the adduct is such to yield from about 0.9 to about 1.5 moles of epichlorohydrin equivalent of the polyamide. Examples of commercially available suitable polyamide epichlorohydrin adducts include GP2925 from Georgia Pacific Company (Atlanta, GA). This polyamide epichlorohydrin adduct is an amber colored liquid having a percent solids of about 20 to about 20.5, a viscosity in centistokes of about 140 to about 200, a specific gravity of about 1.04 to about 1.05, a weight per gallon in pounds of about 8.7, a pH at 25°C of about 6.9 to about 7.3, a boiling point of about 100°C, a flash point of none to boiling and a storage life at 25°C of six months. In addition, the adduct may contain a trace of free epichlorohydrin. Other examples of commercially available adducts include POLYCUP 1884, 2002, 172, and 289 from Hercules (Wilmington, Delaware). Other information about polyamide epichlorohydrin adducts are disclosed in EP 0 450 638 and US 4859340, incorporated herein by reference.

Polyamide epichlorohydrin adduct can be present in the aqueous composition in an amount of no less than about 0.1 % by weight, in other embodiments no less than about 0.5 % by weight, in other embodiments no greater than about 3% by weight, in other embodiments no greater than about 5 % by weight, based on the weight of the polymer solids.

The aqueous composition may also include other components including those that are typically used in the emulsion polymerization such as surfactants, stabilizers (such as from 0% to about 6% by weight, based on the polymer solids, of hydrocolloid stabilizers such as polyvinyl alcohol, poly(hydroxy alkyl cellulose) e.g, hydroxyethylcellulose, poly(vinylpyrrolidone), or combinations thereof), buffers, emulsifiers, de-foaming agents, coalescing aids, thickening agents, etc., as well as other modifying components such as fungicides, bactericides, antimicrobials, plasticizers, fillers, adhesion promoters, water dispersible waxes, oils, fire retardant agents, antioxidants, accelerating agents, or combinations thereof.

The aqueous composition can be formulated to exhibit a viscosity suitable for the intended use and application methods. Useful aqueous compositions exhibit a viscosity of no greater than about 10,000 cps, in other embodiments no greater than 6,000 cps, in other embodiments no greater than 3,000 cps, in other embodiments no less than about 10 cps, in other embodiments no less than about 2 cps at 25°C.

The aqueous composition can be formulated to have a solid content sufficient to provide at least about 5 % by weight, in some embodiments at least about 10 % by weight, in other embodiments no greater than about 30% by weight of a dry add-on to a cellulosic substrate. In some embodiments, the aqueous composition can be formulated to have a solids content of no less than about 20 % by weight, in other embodiments no greater than about 70 % by weight solids content.

The aqueous composition can be formulated to exhibit a pH value of less than about 10, in some embodiments no less than about 2, in other embodiments from about 4 to about 5. The pH of the composition can be altered to the desired level using any suitable acid or base including, e.g., sulfuric acid, phosphoric acid, erythobic acid, ammonia, sodium hydroxide, potassium hydroxide, sodium carbonate, t-butyl ammonium hydroxide, or combinations thereof.

The aqueous composition can be formulated to have a particle size of from about 0.1 micron to about 2 microns, or up to about 6 microns.

The aqueous composition can be prepared by mixing the aqueous silane functional polymer with the polyamide epichlorohydrin adduct using any suitable mixing technique.

The aqueous composition can be applied to a variety of cellulosic substrates and then cured, e.g., through the application of energy (e.g., heating) and evaporation of water, to form the cured (i.e., crosslinked), dried composite.

The aqueous composition is particularly useful for producing filter materials. A filter material is normally a cellulosic material that can be made of fibers such as cellulose fibers, polyester fibers, fiberglass fibers, or combinations thereof. Examples of filter materials include filter papers or filter cloths. Examples of filter cloth materials include cellulose, cotton, polyester, polyamide, PE, PP, glass nonwovens, and glass wool.

Substrates composed predominantly of cellulosic materials can be advantageously strengthened by the treatment with the aqueous composition. In addition to reinforcing the substrates, the treatment can provide various benefits to the substrates such as the reduced sensitivity to moisture vapor or water or solvents.

The treatment includes contacting a substrate with the aqueous composition, and drying and curing the composition. Preferably the aqueous composition is heated at a temperature of from about 210°F to about 400°F (99°C to 204°C), preferably from about 300°F to about 400°F (149°C to 204°C), for a period sufficient to dry and cure the composition, e.g., for from about 0.5 min. to about 10 min., preferably from about 1 min. to about 5 min. Drying and curing can be carried out at the same time or separately. For example, the composition may be substantially dried first under an elevated temperature but not substantially cured. At a later stage, heating the composition for a second period to effect curing.

The treated substrate preferably includes the dried composition in an amount of from about 5% by weight to about 30 % by weight, in some embodiments from about 15 % by weight to about 25% by weight based on the weight of the finished (i.e., dried and cured) composite (i.e., substrate plus dried composition).

The aqueous composition can be applied using a variety of application techniques including, e.g., spraying, soaking, immersing, saturating, coating, e.g., roll coating, curtain coating, brush coating, beater deposition, or combinations thereof.

In one embodiment, the aqueous composition is applied to a substrate, e.g., a filter material, e.g., filter paper by the impregnating method, in another embodiment by spraying, and in other embodiment by roll coating on one or both sides of the substrate.

Cellulosic substrates useful as filter materials treated with the aqueous composition of the invention exhibit, among other qualities, an enhanced wet bursting strength, especially after storage under humid conditions and at elevated temperatures, without any adverse effect on the permeability (pore size) of the substrates.

The filter materials exhibit a high strength even after drying (dry tensile strength), and yet after drying below the curing temperature of the aqueous composition the filter materials can still be readily subjected to deformation by folding, grooving or pleating. Following subsequent thermal curing (heat treatment) the aqueous composition gives the resultant filter materials such as filter papers or filter cloths a high dimensional stability. This quality makes it possible to produce semi-finished products and so to break down the manufacturing operation into individual, independent production steps.

The invention will now be described further by way of the following examples. All parts, ratios, percents and amounts stated in the Examples are by weight unless otherwise specified.

### EXAMPLES

### Test Procedures

Test procedures used in the examples include the following.

### Brookfield Viscosity

Brookfield viscosity of an aqueous composition is measured using a Brookfield RVF-100 viscometer (Brookfield Engineering Laboratories, Inc., Stoughton, Massachusetts) at 25°C using spindle # 2 running at 20 rotations per minute (rpm). After dial runs for 5 seconds a reading is taken and recorded in centipoises (cps).

### Dry Bursting Strength Test Method

Dry burst strength is measured according to ASTM D 774-92a Standard Test Method for Bursting Strength of Paper using a Mullen tester equipped with a pressure gage from BF Perkins (Chicopee, MA).

### Wet Bursting Strength Test Method

Wet burst strength is measured according to ASTM D 774-92a Standard Test Method for Bursting Strength of Paper except that after the dry bursting strength test, the test specimens are soaked in a 3% by weight Ivory dish soup solution for 10 minutes prior to testing the wet bursting strength.

### Dry Add On

Dry add on is calculated using the formula [(Tw-Uw)/Uw] x 100, in which Tw represents the weight of the treated (i.e., dried and cured) composite, and Uw represents the weight of the untreated base paper.

### Wet Retention

Wet retention is calculated using the formula [(W/D] x 100, in which W represents the wet bursting strength tested according to the above test method, and D represents the dry bursting strength tested according to the above test method.

### Example 1

An aqueous silane functional polymer dispersion is prepared as follows.

A jacketed reactor is charged with 294.68 grams (g) of water, 3.24 g of LANOLUBRIC 2 (defoamer, from E.F. Houghton INC, Carrolton, GA), 18.49 g of CELVOL 823 (polyvinyl alcohol, from Celanese, Dallas, TX), and 2.4 g of CHANG CHUN BP-24 (polyvinyl alcohol, from Chang Chun Petrochemical, Taipei, Taiwan). The vessel then is heated to 80°C-85°C and maintained at 80°C-85°C for about one hour before being cooled to about 62°C. Thereafter, a mixture of 12.0 g of water, 0.48 g of ammonium persulfate, and 0.30 g of sodium bicarbonate is slowly added. A mixture of 189.43 g of vinyl acetate, 0.47 g of SILQUEST A-174 and 0.11 g of SILQUEST A-171 is then added over a period of 20 minutes. At the end of the addition, the reaction temperature is raised to 68°C. An additional mixture of 442.1 grams of vinyl acetate, 1.09 g of SILQUEST A-174, and 0.26 g of SILQUEST A-171 is fed into the vessel over 2 hours while the temperature is maintained at 67°C-72°C. Then, 201.32 g of water is fed into the reaction vessel over 1.5 hours.

At the end of the monomer mix feed, allow the batch temperature to surge to about 87°C over 2 to 4 hours. After the exotherm has peaked out, cool the reaction to 70°C and then add 2.48 g of SILQUEST A-171. Mix the content for additional 15 minutes before adding the delayed oxidizer-reducer solutions at 70°C. The delayed oxidizer solution is comprised of 0.32 g of t-butyl hydroperoxide (70%). The delayed reducer is comprised of 0.27 g of BRUGGOLITE E01 (from L. Bruggemann Chemical Co, Newtown Square, PA) dissolved in 0.64 g of water.

The reaction is finished by cooling to below 35°C and then adjusted with water, sodium bicarbonate, and 1.5% KATHON LX (antimicrobial, from Rohm & Haas, Philadelphia, PA) to a solids content of about 55%, a pH of 4.5, and a viscosity of about 2000 cps.

### Example 2

An aqueous silane functional polymer dispersion is prepared according to the procedure described in Example 1 except that 0.82 g BRUGGOLITE FF6 is added instead of 0.82 g BRUGGOLITE E01.

The dispersion has a solids content of about 54.3% by weight, a pH of 4, and a viscosity of about 2100 cps.

### Example 3

An aqueous silane functional polymer dispersion is prepared according to the procedure described in Example 1 except that the amount of CELVOL 823 is 10.08 g, that 10.08 g CELVOL 205 is added instead of 2.4 g CHANG CHUN BP-24, and that no BRUGGOLITE E01 is added.

The polymer dispersion has a solids content of about 54.5%, a pH of 4.1, and a viscosity of 1500 cps.

### Example 4

An aqueous silane functional polymer dispersion is prepared according to the procedure described in Example 3 except that the amount of CELVOL 823 is 12 g, that the amount of CELVOL 205 is 8.89 g, and that 0.82 g BRUGGOLITE FF6 is added.

The polymer dispersion has a solids content of about 54.8%, a pH of 4.4, and a viscosity of about 1810 cps.

### Examples 5-7

Each of the aqueous compositions of examples 5-7 is prepared by combining 800 g aqueous silane functional polymer dispersion of each of Examples 1, 3 and 4 with 20.4 g polyamide epichlorohydrin adduct. A portion of each of the compositions are further adjusted with water to obtain a solids content of about 6% by weight as listed in Table I. The aqueous composition of example 6 is further adjusted with sodium hydroxide (50% solution) to get the pH as listed in Table I. The aqueous composition of example 7 is adjusted with ammonium hydroxide (28% solution) to get the pH as listed in Table I.

Sheets of 9P base paper stock from Ahlstrom Filter Co. (Talorville, IL) are saturated with each of the aqueous compositions by dipping into the aqueous compositions, and then allowed to air dry for about 1 hour prior to being cured for 3 minutes at 350°F.

The treated sheets of paper are tested according to the Dry Bursting Strength Test Method and the Wet Bursting Strength Test Method, and the results are shown in Tables II and III together with the dry add on calculated according to the above-described method. The wet retention is calculated according to the above-described method and is shown in Table IV.

### Comparative Examples 1 and 2

Aqueous compositions of comparative examples 1 and 2 are prepared by combining the ingredients according to Table I.

Sheets of 9P base paper stock are saturated with each of the aqueous compositions by dipping into the aqueous compositions, and then allowed to air dry for about 1 hour prior to being cured for 3 minutes at 350°F (177°C). The treated sheets of paper stock are then tested according to the Dry Bursting Strength Test Method and the Wet Bursting Strength Test Method, and the results are shown in Tables II and III together with the dry add on calculated according to the above-described method. The wet retention is calculated according to the above-described method and is shown in Table IV.

**Table I**

| | Comp. Ex. 1 | Ex 5 | Ex. 6 | Ex. 7 | Comp. Ex 2 |
|---|---|---|---|---|---|
| Silane functional polymer dispersion of Ex. 4 (g) | 38.52 | | | | |
| Aqueous composition of Ex. 5 (g) | | 39.22 | | | |
| Aqueous composition of Ex 6 (g) | | | 39.22 | | |
| Aqueous composition of Ex. 7 (g) | | | | 39.22 | |
| PD-8161* (g) | | | | | 46.67 |
| NH4Cl (g) | | | | | 1.05 |
| DI water (g) | 311.48 | 310.78 | 310.78 | 310.78 | 302.28 |
| pH | 4.3 | 4.3 | 8.76 | 7.78 | 4.7 |

| | | | | | |
|---|---|---|---|---|---|
| * polyvinyl acetate/N-methyol-acrylamide copolymer dispersion having 386 PPM formaldehyde, commercially available from HB Fuller Company (St. Paul, MN) | | | | | |

**Table II**

| | Comp. Ex. 1 | Ex. 5 | Ex. 6 | Ex. 7 | Comp. Ex. 2 |
|---|---|---|---|---|---|
| Dry add-on (%) | 16.8 | 20.2 | 19.2 | 19.2 | 18.0 |

| Dry Mullen (psi) | | | | | |
|---|---|---|---|---|---|
| wire | 60.0 | 63.0 | 65.0 | 63.0 | 62.0 |
| wire | 52.0 | 56.0 | 67.0 | 62.0 | 64.0 |
| wire | 61.0 | 60.0 | 60.0 | 64.0 | 69.0 |
| wire | 58.0 | 62.0 | 57.0 | 59.0 | 63.0 |
| wire | 61.0 | 63.0 | 58.0 | 64.0 | 58.0 |
| felt | 59.0 | 64.0 | 60.0 | 68.0 | 59.0 |
| felt | 51.0 | 56.0 | 61.0 | 59.0 | 69.0 |
| felt | 59.0 | 61.0 | 52.0 | 60.0 | 69.0 |
| felt | 60.0 | 60.0 | 59.0 | 63.0 | 65.0 |
| felt | 61.0 | 63.0 | 57.0 | 69.0 | 60.0 |
| Avg. | 58.2 | 60.8 | 59.6 | 63.1 | 63.8 |
| Std. Deviation | 3.7 | 2.9 | 4.2 | 3.4 | 4.2 |

**Table III**

| | Comp. Ex 1 | Ex. 5 | Ex. 6 | Ex. 7 | Comp. Ex 2 |
|---|---|---|---|---|---|
| Dry add-on (%) | 16.6 | 20.5 | 19.5 | 19.4 | 17.5 |

| Wet Mullen (psi) | | | | | |
|---|---|---|---|---|---|
| wire | 18.0 | 32.0 | 29.0 | 32.0 | 31.0 |
| wire | 19.0 | 33.0 | 32.0 | 31.0 | 29.0 |
| wire | 16.0 | 31.0 | 25.0 | 34.0 | 29.0 |
| wire | 15.0 | 31.0 | 25.0 | 35.0 | 31.0 |
| wire | 19.0 | 30.0 | 30.0 | 30.0 | 28.0 |
| felt | 17.0 | 31.0 | 30.0 | 32.0 | 26.0 |
| felt | 15.0 | 32.0 | 28.0 | 33.0 | 29.0 |
| felt | 15.0 | 29.0 | 29.0 | 34.0 | 29.0 |
| felt | 17.0 | 30.0 | 29.0 | 29.0 | 31.0 |
| felt | 21.0 | 32.0 | 34.0 | 29.0 | 30.0 |
| Avg. | 17.2 | 31.1 | 29.1 | 31.9 | 29.3 |
| Std. Deviation | 2.0 | 1.2 | 2.8 | 2.1 | 1.6 |

**Table IV**

| | Comp. Ex. 1 | Ex. 5 | Ex. 6 | Ex. 7 | Comp. Ex. 2 |
|---|---|---|---|---|---|
| Wet Retention (%) | 30 | 51 | 49 | 51 | 46 |

## Claims

1. An aqueous composition comprising:
a) an aqueous silane functional polymer, said silane functional polymer comprising a reaction product of
i) at least one first ethylenically unsaturated monomer that is free of oxysilane functional groups, and
ii) at least one second ethylenically unsaturated monomer that comprises an oxysilane functional group, and
b) a polyamide epichlorohydrin adduct.

2. The aqueous composition of claim 1, wherein said first ethylenically unsaturated monomer comprises esters of C₃ to C₆ α, β-monoethylenically unsaturated monocarboxylic or dicarboxylic acids with C₁ to C₁₂ alkanols; vinyl esters of C₁ to C₁₈ monocarboxylic or dicarboxylic acids; vinylaromatic compounds; ethylenically unsaturated monocarboxylic acids or dicarboxylic acids or their anhydrides; acrylamides and alkyl-substituted acrylamides; or combinations thereof.

3. The aqueous composition of claim 1 or 2, wherein said first ethylenically unsaturated monomer comprises vinyl acetate, butyl acrylate, ethyl acrylate, methyl acrylate, 2-2-ethylhexyl acrylate, styrene, acrylic acid, methacrylic acid, acrylamide, N-methylolacrylamide, dibutyl maleate, dioctyl maleate, vinyl neo decanoate, or combinations thereof.

4. The aqueous composition of any one of claims 1-3, wherein said second ethylenically unsaturated monomer comprises (acryloxypropyl)trimethoxysilane, (methacryloxypropyl)trimethoxysilane, vinyltrimethoxysilane, vinyltriethoxysilane, or combinations thereof.

5. The aqueous composition of any one of claims 1-4, wherein said second ethylenically unsaturated monomer is present in an amount of from about 0.01 % by weight to about 4% by weight, based on the weight of the polymer solids.

6. The aqueous composition of any one of claims 1-5, wherein said polyamide epichlorohydrin adduct is present in an amount of from about 0.1% by weight to about 5% by weight, based on the weight of the polymer solids.

7. A method of treating a substrate comprising contacting said substrate with an aqueous composition of any one of claims 1-6 and curing said aqueous composition.

8. An article comprising a substrate that is treated with an aqueous composition of any one of claims 1-6.

9. The article of claim 8, wherein said substrate is a cellulosic substrate that comprises paper, or substrates made of cellulosic fibers, polyester fibers, fiberglass fibers, or combinations thereof.

10. The article of claims 8 or 9, wherein said substrate has a dry add on of from about 5% by weight to about 30% by weight.

11. The article of any one of claims 8-10, wherein said substrate exhibits, upon cure, a wet retention of greater than about 30% at about 20% dry add-on.

12. The article of any one of claims 8-11, wherein said article is a filter.

13. A method of filtering a particle-containing fluid, comprising passing said fluid through the article of any one of claims 8-12 to separate the particles from the fluid.

## Patentansprüche

1. Eine wässrige Zusammensetzung umfassend:
a) ein wässriges silanfunktionelles Polymer, wobei das silanfunktionelle Polymer ein Reaktionsprodukt aus
i) mindestens einem ersten ethylenisch ungesättigten Monomer, welches frei von funktionellen Oxysilangruppen ist,
und
ii) mindestens einem zweiten ethylenisch ungesättigten Monomer, welches eine funktionelle Oxysilangruppe umfasst,
umfasst,
und
b) ein Polyamid-Epichlorhydrin-Addukt.

2. Die wässrige Zusammensetzung gemäß Anspruch 1, worin das erste ethylenisch ungesättigte Monomer Ester von C₃ bis C₆ α, β-monoethylenisch ungesättigten Monocarbonsäuren oder Dicarbonsäuren mit C₁ bis C₁₂ Alkanolen; Vinylester von C₁ bis C₁₈ Monocarbonsäuren oder Dicarbonsäuren; vinylaromatische Verbindungen; ethylenisch ungesättigten Monocarbonsäuren oder Dicarbonsäuren oder deren Säureanhydride; Acrylamide und Alkyl-substituierte Acrylamide; oder Gemische davon umfasst.

3. Die wässrige Zusammensetzung gemäß Ansprüch 1 oder 2, worin das erste ethylenisch ungesättigte Monomer Vinylacetat, Butylacrylat, Ethylacrylat, Methylacrylat, 2-2-Ethylhexylacrylat, Styrol, Acrylsäure, Methacrylsäure, Acrylamid, N-Methylolacrylamid, Dibutylmaleat, Dioctylmaleat, Vinyl-Neodecanoat, oder Gemische davon umfasst.

4. Die wässrige Zusammensetzung gemäß einem der Ansprüche 1 - 3, worin das zweite ethylenisch ungesättigte Monomer (Acryloxypropyl)trimethoxysilan, (Methacryloxypropyl)trimethoxysilan, Vinyltrimethoxysilan, Vinyltriethoxysilan, oder Gemische davon umfasst.

5. Die wässrige Zusammensetzung gemäß einem der Ansprüche 1 - 4, worin das zweite ethylenisch ungesättigte Monomer in einer Menge von etwa 0,01 Gew.-% bis etwa 4 Gew.-%, bezogen auf das Gewicht der Polymerfeststoffe, vorliegt.

6. Die wässrige Zusammensetzung gemäß einem der Ansprüche 1 - 5, worin das Polyamid-Epichlorohydrin-Addukt in einer Menge von etwa 0,1 Gew.-% bis etwa 5 Gew.-%, bezogen auf das Gewicht der Polymerfeststoffe, vorliegt.

7. Ein Verfahren zur Behandlung eines Substrats, umfassend das Kontaktieren des Substrats mit einer wässrigen Zusammensetzung gemäß einem der Ansprüche 1 - 6 und das Aushärten der wässrigen Zusammensetzung.

8. Ein Artikel, der ein Substrat umfasst, welches mit einer wässrigen Zusammensetzung gemäß einem der Ansprüche 1 - 6 behandelt ist.

9. Der Artikel gemäß Anspruch 8, worin das Substrat ein zellulosisches Substrat ist, welches Papier oder Substrate aus zellulosischen Fasern, Polyesterfasern, Fiberglasfasern oder Gemische davon, umfasst.

10. Der Artikel gemäß Anspruch 8 oder 9, wobei das Substrat ein trockenes Zusatzgewicht von etwa 5 Gew.-% bis etwa 30 Gew.% aufweist.

11. Der Artikel gemäß einem der Ansprüche 8 - 10, wobei das Substrat nach Aushärtung bei etwa 20% trockenem Zusatzgewicht im feuchten Zustand eine Retention von mehr als 30 % aufweist.

12. Der Artikel gemäß einem der Ansprüche 8 - 11, wobei der Artikel ein Filter ist.

13. Ein Verfahren zum Filtern einer partikelhaltigen Flüssigkeit, welches das Durchleiten der Flüssigkeit durch den Artikel gemäß einem der Ansprüche 8 - 12 umfasst, um die Partikel von der Flüssigkeit zu trennen.

## Revendications

1. Composition aqueuse comprenant :
a) un polymère aqueux à fonction silane, ledit polymère aqueux à fonction silane comprenant un produit réactionnel
i) d'au moins un premier monomère éthyléniquement insaturé qui ne comporte pas de groupes fonctionnels oxysilane, et
ii) d'au moins un second monomère éthyléniquement insaturé qui comprend un groupe fonctionnel oxysilane, et
b) un produit d'addition polyamide-épichlorohydrine.

2. Composition aqueuse selon la revendication 1, dans laquelle ledit premier monomère éthyléniquement insaturé comprend des esters d'acides monocarboxyliques ou dicarboxyliques α,β-monoéthyléniquement insaturés en C₃ à C₆ avec des alcanols en C₁ à C₁₂ ; des esters vinyliques d'acides monocarboxyliques ou dicarboxyliques en C₁ à C₁₈ ; des composés vinylaromatiques ; des acides monocarboxyliques ou des acides dicarboxyliques éthyléniquement insaturés ou leurs anhydrides ; des acrylamides et des acrylamides alkyl-substitués ; ou leurs combinaisons.

3. Composition aqueuse selon la revendication 1 ou 2, dans laquelle ledit premier monomère éthyléniquement insaturé comprend l'acétate de vinyle, l'acrylate de butyle, l'acrylate d'éthyle, l'acrylate de méthyle, l'acrylate de 2-2-éthylhexyle, le styrène, l'acide acrylique, l'acide méthacrylique, l'acrylamide, le N-méthylolacrylamide, le maléate de dibutyle, le maléate de dioctyle, le néodécanoate de vinyle ou leurs combinaisons.

4. Composition aqueuse selon l'une quelconque des revendications 1 à 3, dans laquelle ledit second monomère éthyléniquement insaturé comprend l'(acryloxypropyl)triméthoxysilane, le (méthacryloxypropyl)triméthoxysilane, le vinyltriméthoxysilane, le vinyltriéthoxysilane ou leurs combinaisons.

5. Composition aqueuse selon l'une quelconque des revendications 1 à 4, dans lequel ledit second monomère éthyléniquement insaturé est présent en une quantité d'environ 0,01 % en poids à environ 4 % en poids, par rapport au poids des solides polymères.

6. Composition aqueuse selon l'une quelconque des revendications 1 à 5, dans laquelle ledit produit d'addition polyamide-épichlorohydrine est présent en une quantité d'environ 0,1 % en poids à environ 5 % en poids, par rapport au poids des solides polymères.

7. Procédé de traitement d'un substrat comprenant la mise en contact dudit substrat avec une composition aqueuse selon l'une quelconque des revendications 1 à 6 et la prise (curing) de ladite composition aqueuse.

8. Article comprenant un substrat qui est traité avec une composition aqueuse selon l'une quelconque des revendications 1 à 6.

9. Article selon la revendication 8, dans lequel ledit substrat est un substrat cellulosique qui comprend le papier, ou des substrats constitués de fibres cellulosiques, de fibres polyester, de fibres de verre ou leurs combinaisons.

10. Article selon les revendications 8 ou 9, dans lequel ledit substrat a un complément sec d'environ 5 % en poids à environ 30 % en poids.

11. Article selon l'une quelconque 8 à 10, dans lequel ledit substrat présente, lors de la prise, une rétention humide de plus d'environ 30 % à environ 20 % du complément sec.

12. Article selon l'une quelconque des revendications 8 à 11, dans lequel ledit article est un filtre.

13. Procédé de filtration d'un fluide contenant des particules, comprenant le passage dudit fluide à travers l'article selon l'une quelconque des revendications 8 à 12 pour séparer les particules du fluide.
